Europäisches Patentamt

European Patent Office

Office européen des brevets

(19)

(11) Publication number: **0 117 254**
**B1**

## (12) EUROPEAN PATENT SPECIFICATION

(45) Date of publication of patent specification: **07.01.88**

(21) Application number: **83100534.3**

(22) Date of filing: **21.01.83**

(51) Int. Cl.⁴: **G 02 B 3/08, B 29 D 11/00**

(54) **Improved fresnel lens, and method and mold for manufacturing it.**

(43) Date of publication of application:
**05.09.84 Bulletin 84/36**

(45) Publication of the grant of the patent:
**07.01.88 Bulletin 88/01**

(84) Designated Contracting States:
**AT BE CH DE FR GB LI LU NL SE**

(56) References cited:
**FR-A- 902 370**
**LU-A- 80 376**
**US-A-4 170 616**

**PATENTS ABSTRACTS OF JAPAN, vol. 6, no.
18(P-100)(896), 2nd February 1982**

(73) Proprietor: **A.T.B. S.p.A.**
**Via Palmiro Togliatti 30**
**I-20030 Senago (Province of Milano) (IT)**

(72) Inventor: **Bordignon, Abramo**
**Via Palmiro Togliatti, 32**
**Senago (Province of Milano) (IT)**

(74) Representative: **Modiano, Guido et al**
**MODIANO, JOSIF, PISANTY & STAUB Modiano
& Associati Via Meravigli, 16
I-20123 Milan (IT)**

Courier Press, Leamington Spa, England.

## Description

This invention relates to an improved Fresnel lens, as well as to a method and mold for manufacturing it.

It is known to use, in order to cut down the weight and cost of wide aperture lenses, so-called Fresnel lenses, which comprise a central lenticular portion surrounded by concentrically arranged prismatic rings. In actual practice, Fresnel lenses of this general type are usually provided with a first smooth face, of either flat or conical or frustum or spherical configuration, and second face formed in cross-section with a series of saw-like teeth encircling a centrally located core lens. These teeth extend across their related Fresnel lens face as a set of concentrical rings comprising a refractive portion, which has an inclination arranged to vary from one tooth to the next, or between concentrical rings, and a connection slope or flank in the form of a steeply inclined front arranged to interconnect the refractive portion of one tooth with the refractive portion of an adjacent tooth.

The optical quality of Fresnel lenses essentially depends on the shape of said teeth, and in particular of said connection slopes or flanks which — performing no optical functions, but merely that of interconnecting two consecutive refractive portions together — are required to interfere as little as possible with the light path. In ideal theoretical conditions, said connection slopes or steep fronts of the teeth should extend substantially parallel to the direction of the light beam which is being transmitted through the lens, so as to induce the least possible disturbance. However, this optimum situation can not be achieved in actual practice, where Fresnel lenses of conventional design are manufactured with molding techniques, utilizing materials with a suitable refractive index. In fact, molding implies design limitations arising from mold withdrawal requisites, so that said steep front must be suitably located for withdrawal from the mold. Actually, the aforesaid steep front or connection slope is prevented from following the true light path through thus produced Fresnel lenses, and happens to interfere with said light path, so that optical performance is affected.

The above situation is further aggravated by the unavoidable presence of radiused inner and outer corner edges on said teeth, which further reduces the useful refractive portions.

FR—A—902 370 shows a Fresnel lens with a groove pattern in the form of a groove having the shape of a continuous spiral which is obtained by a cutting tool process.

In view of the foregoing, and of the interest attached to molded Fresnel lenses, on account both of their low cost and of the possibility that they afford, among other things, of producing wide aperture lenses, it is a primary object of this invention to obtain by a molding process an improved Fresnel lens, whereby optical disturbance factors can be minimized, without adding to the difficulties inherent to the molding operations.

It is a further object of the invention to provide a method, and a mold, which enable the formation of said improved Fresnel lens and are simple to implement and use.

These and other objects, such as will be apparent hereinafter, are all achieved by the invention as defined in claims 1 and 2.

The features and advantages of this invention will be more clearly apparent from the following description of a preferred, but not limitative, embodiment thereof, as illustrated by way of example only in the accompanying drawings, where:

Figures 1 and 1a are major portion and enlarged detail views, respectively, of a conventional Fresnel lens of the flat or planar type;

Figure 1b shows schematically, and with reference to Figure 1a, an ideal section profile for a Fresnel lens of the planar type;

Figures 2 and 2a are major portion and enlarged detail views, respectively, of a Fresnel lens of the spherical type;

Figure 2b shows, with reference to Figure 2a, an ideal section profile for the above spherical Fresnel lens;

Figure 3 is a front view schematically illustrating a Fresnel lens of improved design according to this invention;

Figure 3a shows the lens of Figure 3 as inserted between two mold halves;

Figure 4 illustrates the lens of Figure 3a during the withdrawal step from a mold; and

Figure 4a is a front view showing schematically the lens of Figure 4 while being withdrawn from the mold.

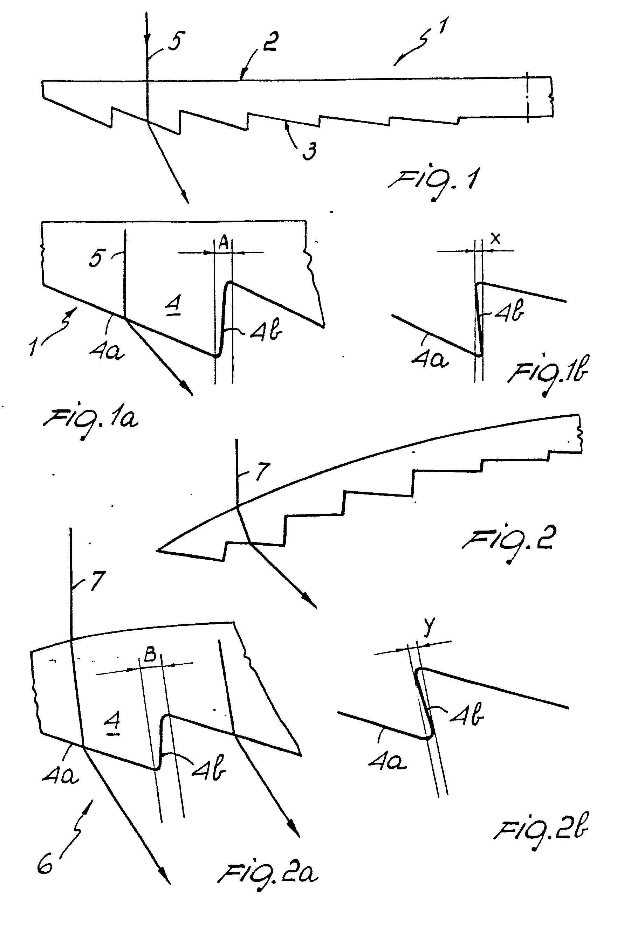

With reference to Figures 1, 1a, 2, 2a, there are evidenced for comparison purposes the conventional design of Fresnel lenses and the drawbacks affecting it. Figures 1 and 1a, in particular, show a Fresnel lens 1 of the planar type, namely one having a first face 2 which is flat and a second face 3 which is formed with steps or teeth 4, each of said steps or teeth comprising a refractive portion 4a and connection flank or slope 4b. Light rays 5 passing through the planar lens 1 undergo no deviations through the lens itself, and accordingly the disturbance induced by the connection flanks 4b is relatively small, as shown in Figure 1a. Actually, any disturbance would only be attributable to slight negative-going ramps on the flanks 4b, and above all, to the areas affected by the radiusing of the corner edges. The last mentioned areas are comparatively broad ones, because the radiused regions cannot overlap each other owing to the presence of the cited slight negative-going angles of attack of the flanks 4b.

Figures 2 and 2a are similar representations of a Fresnel lens of the spherical type, as indicated at 6, wherein an incident light ray 7 undergoes a deviation in flowing through the lens. In this instance, the flank 4b of each tooth 4 is allowed to interfere with the light beam to an even larger extent than is apparent from the planar Fresnel lens of Figures 1 and 1a.

In Figure 2a, the reference character B desig-

nates the area of negative interference with the light path, and this area is larger than the corresponding area A of Figure 1a, owing to the steeper inclination of the flank 4b relative to the light ray 7, which steeper inclination is due to the light rays 7 being deviated increasingly more toward the edges of the lens.

Figures 1b and 2b illustrate ideal theoretical shapes for the teeth 4, effectively minimizing interference with the light beam by the flanks 4b. In actual practice, the flanks 4b should be so inclined as to bring the radiused areas to overlap each other relative to the direction of the light path through the lens, thus restricting the interference to respective regions X and Y having a width dimension which corresponds to a single radiused area.

However, the above ideal solution would not be feasible with currently available molded construction lenses, because it requires more or less deep undercuts which are bound to hinder the withdrawal of the lens from that mold which forms the toothed or serrated face thereof.

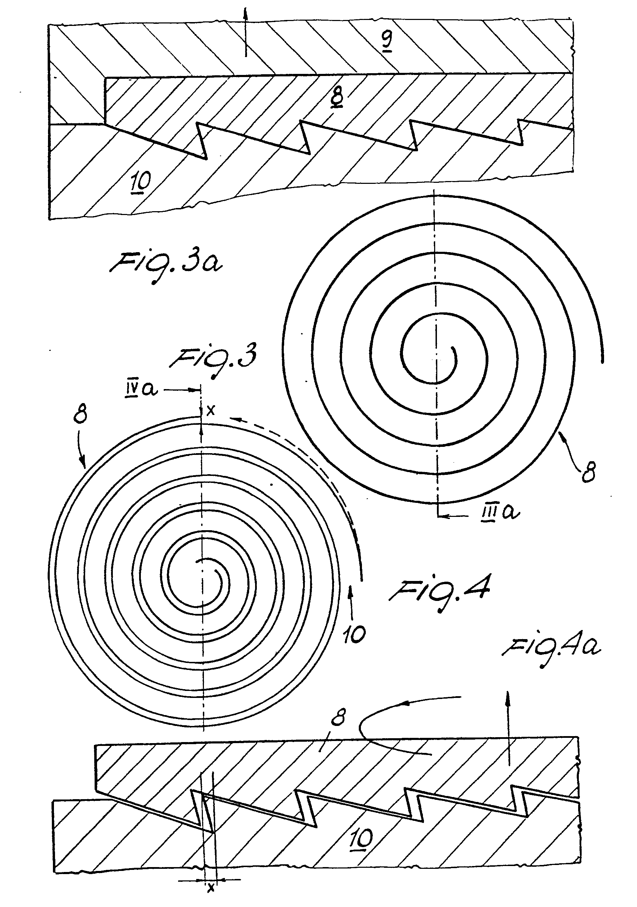

Figures 3, 3a, 4, 4a show how the improved Fresnel lenses of this invention obviate the technical problem poses by said undercuts, thus making the ideal section profiles 1b and 2b feasible.

Figure 3, in particular, shows how the second or toothed face 3 of the inventive Fresnel lens 8 — which for illustration purposes happens to be a planar one, but may be conical or spherical, as desired — is provided with teeth 4 generally defining a spiral pattern, and specifically a constant pitch spiral.

By virtue of this novel design, which is highly different from any known ones where the teeth 4 were used to form concentrical rings, a method of manufacturing Fresnel lenses becomes applicable whereby the molding step proper (Figure 3a) is followed by a step of withdrawal or separation of the lens 8 from one forming element by relative rotation of the resulting lens (Figure 4). This rotation, as is also evidenced in Figure 4a, results in an offset relationship and removal of the turns of the lens 8 away from the mold turns. In fact, and in a known manner, the spiralling turns have a gradually decreasing radius of curvature, and said offset relationship brings area of the lens 8 with given curvature radii into alignment with areas of the mold having smaller radii of curvature.

As shown in Figures 4 and 4a, the mutual offsetting of the lens 8 and mold may be relatively small in magnitude, such as to exceed the width X of the largest undercut, as the latter changes.

Advantageously, the mold for implementing this method comprises a first mold half 9 adapted to define the smooth face and side edges of the Fresnel lens, a second mold half 10 adapted to define the toothed or serrated face of the lens 8, and means operative to produce a relative rotation of the lens 8 and second mold half 10. This means are not shown, and may be in the form of dowel pins protruding from the lens, or of holes to be engaged with a suitable tool. In a more suitable manner, this means may be directly connected to the first mold half 9 which, as it is moved away, can perform a partial rotation movement.

The improved Fresnel lens according to the invention fully achieves its objects.

With the spiral pattern design provided, it becomes possible to impart to the lens teeth the shape shown in Figures 1b and 2b, which concurrently forming the lens by the molding process; the spiral pattern allows the removal of the lens by simply screwing the lens out, notwithstanding the undercuts required for an optimum shaping of the lens.

## Claims

1. A method for manufacturing a Fresnel lens (8) with a groove pattern in the form of a groove having the shape of a continuous spiral, said groove having a side wall forming an angle of less than 90% with respect to the main lens surface extension thereby defining an undercut formation along the groove, characterized in that the method comprises the steps of molding said lens between two mold halves facing each other, one (10) thereof having a spiral pattern in the shape of said continuous spiral groove and with a lateral surface having an inclination corresponding to said angle thereby to form said undercut, said spiral pattern thereby engaging said spiral groove of the lens molding with a mutually snapping relationship upon formation of said spiral groove, and separating said lens so formed from said spiral pattern presenting mold half by performing a relative rotation between said lens (8) and said spiral pattern presenting mold half (10) and withdrawing the lens (8) from the mold.

2. A mold for manufacturing a Fresnel lens according to claim 1 comprising two mold halves (9, 10), one (10) thereof with a spiral pattern adapted to define the pattern of the Fresnel lens (8) and means for producing a relative rotation between said lens (8) and said spiral pattern presenting mold half (10).

## Patentansprüche

1. Verfahren zur Herstellung einer Fresnel-Linse (8) mit Rillenmuster in Form einer Rille in der Gestalt einer zusammenhängenden Spirale, welche Rille eine Seitenwand besitzt, die in bezug auf die Erstreckung der Hauptlinsenfläche einen Winkel von weniger als 90° bildet und dabei eine Unterschneidung entlang der Rille definiert, dadurch gekennzeichnet, daß das Verfahren folgende Stufen umfaßt: Formung der Linse zwischen zwei einander gegenüberliegenden Formhälften, von denen eine (10) ein Spiralmuster in der Gestalt der genannten zusammenhängenden Spiralrille und mit einer Seitenfläche mit einer Neigung entsprechend dem genannten Winkel unter Bildung der genananten Unterschneidung aufweist, wobei das Spiralmuster in die Spiralrille des Linsenformlings gegenseitig einrastend beim Formen der Spiralrille eingreift, und Trennen der so geformten Linse von der das Spiralmuster aufweisenden Formhälfte durch Durchführung einer Relativdrehung zwischen der Linse (8) und der das Spiralmuster aufweisenden Formhälfte (10) und Entnahme der Linse (8) aus der Form.

2. Form zur Herstellung einer Fresnellinse nach Anspruch 1 bestehend aus zwei Formhälften (9, 10), von denen eine (10) ein Spiralmuster aufweist, welches das Muster der Fresnel-Linse (8) definiert, und aus einer Einrichtung zur Herbeiführung einer Relativdrehung zwischen der Linse (8) und der das Spiralmuster aufweisenden Formhälfte (10).

**Revendications**

1. Procédé pour fabriquer une lentille de Fresnel (8) ayant un modèle de sillon constitué par un sillon ayant la forme d'une spirale continue, ledit sillon ayant une paroi latérale formant un angle de moins de 90 % par rapport à l'extension de surface principale de la lentille définissant ainsi une formation de contre-dépouilles le long du sillon, caractérisé en ce que le procédé comprend les étapes consistant à mouler ladite lentille entre deux moitiés de moule disposées face à face, l'une (10) de celles-ci ayant un modèle de spirale sous forme dudit sillon en spirale continue et avec une surface latérale ayant un inclinaison correspondant audit angle pour former ainsi ladite contre-dépouille, ledit modèle de spirale venant ainsi en prise avec ledit sillon en spirale du moulage de lentille avec une relation d'enclinquetage mutuel lors de la formation dudit sillon en spirale, et à séparer la lentille ainsi formée de la moitié de moule présentant ledit modèle de spirale en exécutant une rotation relative entre la lentille (8) et la moitié de moule (10) présentant le modèle de spirale et en retirant la lentille (8) du moule.

2. Moule pour fabriquer une lentille de Fresnel selon la revendication 1 comprenant deux moitiés de moule (9, 10) dont l'une (10) présente un modèle de spirale propre à définir le modèle de la lentille de Fresnel (8), et des moyens pour produire une rotation relative entre ladite lentille et ladite moitié de moule (10) présentant le modèle de spirale.

0 117 254

Fig.1

Fig.1a

Fig.1b

Fig.2

Fig.2a

Fig.2b

Fig.3a

Fig.3

Fig.4

Fig.4a